# EUROPEAN PATENT APPLICATION

(11) **EP 4 250 026 A1**
(43) Date of publication of application: **27.09.2023**
(21) Application number: 22163355.5
(22) Date of filing: 21.03.2022
(51) Int. Cl.: G05B 19/042, G05B 19/418

(54) **SYSTEM AND METHOD FOR MONITORING PRODUCT PROCESSING EQUIPMENT OF AN INDUSTRIAL PLANT**

(71) Applicant: BASF SE, 67056 Ludwigshafen am Rhein (DE)
(72) Inventor: Vorsprach, Michel, 67056 Ludwigshafen am Rhein (DE); Gau, Sebastian, 67056 Ludwigshafen am Rhein (DE); Poensgen, Oliver, 67056 Ludwigshafen am Rhein (DE); Buck, Jan, 67056 Ludwigshafen am Rhein (DE)
(74) Representative: Eisenführ Speiser

(57) **Abstract**

A system for monitoring product processing equipment (20, 30) of an industrial plant is provided. The system comprises a first layer (100) having a plurality of sensors (110-150) configured to detect parameters of the product processing equipment (20, 30) of the industrial plant, a second layer (200) configured to implement a process control system based on data from the first layer (100), and a third layer (300) configured to implement an operational control system. The system furthermore at least one loT Edge unit (230, 310) in the second and/or third layer (200, 300) configured to receive data from the first and/or second layer (100, 200) and to analyse the received data, and an loT hub (700) configured to remotely control, manage and/or monitor the at least one loT Edge unit (230, 310).

## Description

### FIELD OF THE INVENTION

The invention relates to a system and a method for monitoring product processing equipment of an industrial plant.

### BACKGROUND FIELD OF THE INVENTION

Industrial plants like a chemical production plant are a highly security sensitive production environment. E.g. chemical plants typically include multiple assets to produce chemical products. Multiple sensors are distributed in such plants for monitoring or controlling purposes as well as for collecting data. Hence, an industrial production results in a huge amount of data. Applying new technologies in cloud computing and big data analytics is therefore of great interest. Unlike other manufacturing industries, however, process industry is subject to very high security standards. For this reason, computing infrastructures are typically compartmented with highly restrictive access to monitoring and control systems. Therefore, latency and availability considerations contravene a simple migration of current embedded control systems to e.g. a cloud computing system or data analysing systems. It is therefore a challenge to bridge the gap between highly proprietary industrial manufacturing systems and cloud technologies.

### SUMMARY OF THE INVENTION

The object of the presented invention is to provide a system and method for monitoring industrial plant equipment, in particular product processing equipment of an industrial production (or product processing) plant, e.g. of a chemical product processing or chemical production plant, which allows an improved and robust communication with cloud application.

According to an aspect of the invention, a system for monitoring product processing equipment of an industrial plant is provided. The system comprises a first layer having a plurality of sensors configured to detect parameters of the equipment of the industrial plant. The system furthermore comprises a second layer configured to implement a process control system based on data from the first layer. The system also comprises at least one Internet-of-Things loT Edge unit in the second or a third layer to receive data from the first or second layer and to analyse the received data. Furthermore, an Internet-of Things loT hub is provided which remotely controls, manages and/or monitors the loT Edge devices.

According to an embodiment of the invention, the system also comprises an interface coupled to the first and/or second processing layer configured to receive data from the first and/or second layer and to pre-process the received data. The interface comprises an loT Edge unit or is implemented as an loT Edge unit. The interface comprises an analyser configure to add metadata to the data from the plurality of sensors. The interface is configured to analyse the incoming data and to output the processed data to a data sink like a central data sink. The interface is configured to only allow a one way data communication to the (central) data sink.

The data sink can be implemented as a central data sink, like a cloud based data sink, e.g. a cloud server or a cloud based service.

According to a further embodiment of the invention, the interface comprises an analyser configured to analyse the incoming data and to add meta data, a data buffer, a key performance indicator KPI calculator configured to determine at least one key performance indicator KPI based on the data in the buffer and an upload selector configured to select data from the incoming data to be forwarded to the data sink.

The KPI calculator allows the determination of a key performance indicator which can be forward to the data sink. Accordingly, it is possible to greatly reduce the amount of data that needs to be forwarded to the data sink without losing too much information from the data. This will also greatly reduce the amount of traffic between the interface and the data sink which can be implemented as a cloud service. According to a further aspect of the invention, the meta data comprises time information, in particular time stamps or time shift information and/or information on the respective sensor which has detected the data.

If the metadata contains time information, it is also possible in the system for monitoring industrial plant equipment to compare data from different industrial plant equipment or from different sensors in or for the industrial plant equipment. With the sensor related metadata (e.g. sensor ID, sensor type), different kind of sensors can be analysed even if they are distributed across different industrial plants or different sub-divisions of the industrial plant. The metadata can be compared with metadata and raw data e.g. in data sink. According to a further aspect of the invention, the second layer comprises a condition monitoring system and/or a machine protection system. The interface is configured to analyse the data from the content monitoring system and/or the machine protection system and to add meta data to the output data, to process the data in order to reduce the amount of data if required and to output the processed data to the data sink.

According to an aspect of the invention a method of monitoring mentioned industrial plant equipment is provided. A plurality of sensors detect parameters of equipment of an industrial plant in a first layer. In a second layer, a process control system based is implemented based on data from the first layer. The system also comprises at least one Internet-of-Things loT Edge unit in the second or third layer to receive data from the first or second layer and to analyse the received data. Furthermore, an Internet of Things loT hub is provided which remotely controls, manages and/or monitors the loT Edge devices.

According to an embodiment of the invention, in an interface implemented as an loT Edge unit, data is received from the first and/or second layer and the received data is pre-processed. In an analyser in the interface, meta data is added to the data from the plurality of sensors. Incoming data are analysed in the interface and the processed data are output to the data sink. The interface is configured to only allow a one way data communication to the data sink.

In an aspect of the invention a system for monitoring mentioned industrial plant equipment is provided. The system comprises a first layer with a plurality of sensors measuring parameters of components of an industrial plant. The system also comprises a second layer related to a process control system for the industrial plant. Data from the sensors in an industrial plant are extracted and provided with metadata like time information (a time stamp) and/or information on the sensor (like name, type, ID). The data and optionally the metadata are pre-processed to reduce the amount of data if required. Then the data is forwarded to a cloud service where the data can be analysed or further processed. In other words, existing data from within the industrial plant is re-used for analysis purposes. According to an aspect of the invention a way to pre-process or prepare the data for the subsequent processing outside a first and second layer of the automation architecture is provided. In particular data from various sensors across the plant can be harmonized (with respect to a time code or time information and other metadata) and collected at a (central) location for further deeper analysis.

According to an aspect of the invention, the industrial plant may comprise a control system for controlling the operation of the elements of the industrial plant. The industrial plant comprises a plurality of sensors for monitoring the equipment of the industrial plant. The industrial plant may also comprise a condition monitoring system CMS, a machine protection system MPS and/or a process information management system PIMS. The monitoring system can use or share the hardware of the control system for the industrial plant. It should, however, be noted that the monitoring system can only receive the data from the control system (like data from the sensors, the condition monitoring system, the machine protection system and/or the process information management system). The monitoring system according to an aspect of the invention is not able and not allowed to send data to the sensors or the other systems of the control system. Furthermore, the monitoring system is not able and is not allowed to influence the operation of the control system. The monitoring system according to an aspect of the invention merely uses the data from the sensors, the condition monitoring system CMS, the machine protection system MPS and process information management system PIMS for monitoring purposes. Accordingly, the respective data is firstly used for the control of the industrial plant and can then also be re-used for monitoring purposes.

Although the monitoring system may share hardware with the control system, the operation of the monitoring system does not interact with or influence the control system of the industrial plant.

According to an aspect of the invention an industrial plant comprising at least one industrial plant equipment, a control system having a first layer having a plurality of sensors configured to detect parameters of the industrial plant equipment, and a second layer configured to implement a process control system based on the data from the first layer is provided. The plant also comprises a system for monitoring product processing equipment as described above.

The invention also relates to a method of monitoring product processing equipment in an industrial plant by a monitoring system. The monitoring system has a first layer (100) with a plurality of sensors for detecting parameters of the equipment, a second layer implementing a process control system based on data from the first layer, and a third layer implementing an operational control system comprising the steps of: Data is received from the first and/or second layer and the received data is analysed in at least one Internet-of-Things loT Edge unit in the second and/orthird layer. The at least one Internet-of-Things loT Edge unit remotely controlling, managing and/or monitoring in or by an Internet-of-Things loT hub.

According to an aspect of the invention computer program for monitoring product processing equipment, the program comprising code means for causing the system to execute a method as described above, when the program is run on a computer controlling the system.

According to an embodiment of the invention, the equipment monitored by the sensors can be rotational machines like motors, centrifuges, or the equipment can be reciprocating pumps, compressors or the like. The equipment can also be fractionating or fractional column, chemical reactors and/or laboratory devices. The equipment can also be a process plant, a flare stack, combustion chamber, a filling plant, a packaging plant or a dryer.

The control system of the industrial plant can be implemented as an automation pyramid or a pyramid according to the NAMUR pyramid.

The interface can be implemented as an Edge unit (e.g. arranged at an edge of the system to reduce the data traffic with the data sink in the cloud) or can share hardware resources of an Edge unit.

Edge computing for example performed by an loT Edge unit relates to a distributed computing capability arranged in the vicinity of a source of data. Accordingly, instead of arranging the computing capabilities exclusively in the cloud, a number of loT Edge units may be provided in or close to an industrial plant. This is advantageous as it reduces the required bandwidth towards the cloud and it can also reduce the latency of the processing.

It shall be understood that the aspects described above and specifically the system for monitoring product processing equipment of claim 1, the method of claim 9 and the computer program of claim 10 have similar and/or identical preferred embodiments in particular as defined in the dependent claims.

It shall be understood that a preferred embodiment or aspect of the present invention can also be any combination of the dependent claims or above embodiments or aspects with a respective independent claim.

These and other aspects of the present invention will be apparent from and elucidated with reference to the embodiments described hereafter.

### BRIEF DESCRIPTION OF THE DRAWINGS

Fig. 1 shows a schematic graph depicting a system for monitoring an industrial plant,
Fig. 2 shows a schematic representation of a part of the system of Fig. 1,
Fig. 3 shows part of the first and second layer of the system of Fig. 1, and
Fig. 4 shows a schematic block diagram of an interface according to an aspect of the invention.

### DETAILED DESCRIPTION

In industrial plants (e.g. chemical plants) typically a great number of equipment is used to produce the desired product. The parameter of this equipment must be detected and the equipment is controlled by a control system based on the detected parameters.

E.g. a chemical process industrial production typically starts with upstream products, which are used to derive further downstream products. The value chain production via various intermediate products to an end product is highly restrictive and based on separate infrastructures. This is detrimental to an introduction of new technologies such as Internet of Things (loT), cloud computing and big data analytics. The process industry is subject to very high standards in particular with regard to availability and security. Hence, computing infrastructures are typically unidirectional and isolated with highly restrictive access to monitoring and control systems of chemical plants. In general, chemical production plants are embedded in an enterprise architecture in an isolated way with different layers to realize a functional separation between operational technology and information technology solutions. These layers are described in the automation pyramid or NAMUR pyramid.

The industrial plant can be implemented as a chemical plant, a chemical processing plant, or a chemical product processing plant.

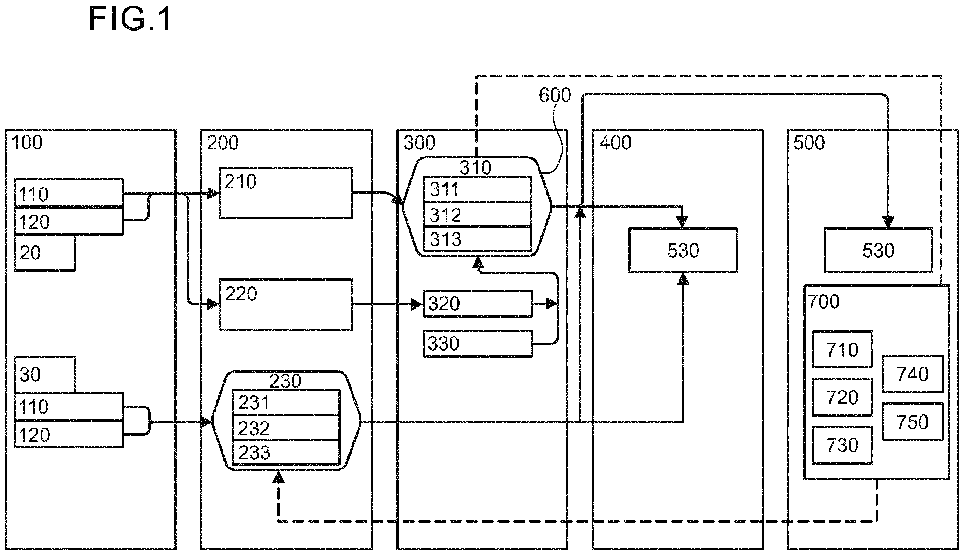

Fig. 1 shows a schematic graph depicting a system for monitoring an industrial plant. A first layer 100 relates to the physical processes in the plant 100. In the first layer 100, a plurality of sensors 110, 120 are arranged to measure or determine various parameters of equipment 20, 30 in the plant 100. Furthermore, the first layer 100 may relate to intelligent devices for sensing and manipulating the physical processes, e.g. via process sensors, analysers and actuators. A second layer 200 relates to process control systems for the industrial plant 100 or part of the industrial plant 100. The second layer 200 can comprise several processing units, like a condition monitoring system CMS 210, a machine protection system MPS 220, and/or an analysing unit 230 which can perform analysing operations. The condition monitoring system CMS 210, the machine protection system MPS 220, and/or the analysing unit 230 use the data from the sensors 110, 120 in the first layer 100 as input to perform their respective function or processing operation. The second layer 200 is thus used for supervising, monitoring and controlling the physical processes in the industrial plant. Real-time controls and software; process information management system PIMS, human-machine interface HMI; supervisory and data acquisition SCADA software may also be part of the second layer 200.

A third layer 300 relates to an operational control system, i.e. to manufacturing/production operations systems for managing production work-flow to produce the desired products. Here, a process information management system PIMS 330 can be provided. Moreover, a condition monitoring system 320 and/or a further analysing unit 310 can be provided. Furthermore, batch management; manufacturing execution/operations management systems (MES/MOMS); laboratory, maintenance and plant performance management systems, data historians and related middleware can be further components of the third layer 300. Time frames for controlling and monitoring may be shifts, hours, minutes, seconds.

The analysing units 230, 310 can be implemented as an Internet-of-Things loT Edge unit. The analysing unit 230, 310 each comprises an analytic component 231, 311, an loT Edge 232, 312 and a container 233, 313.

The analysing unit 310 can comprise an loT Edge unit 312, an analytic component 311 and a container 313.

Edge computing for example performed by an loT Edge relates to a distributed computing capability arranged in the vicinity of a source of data. Accordingly, instead of arranging the computing capabilities exclusively in the cloud, a number of Edge units may be provided in or close to an industrial plant. This is advantageous as it reduces the required bandwidth towards the cloud and it can also reduce the latency of the processing.

According to the invention, at least one loT Edge unit 230, 310 can be provided in the second and/or third layer 200, 300 (and optionally also in the fourth layer 400). These loT Edge units 230, 310 can perform part of the required computing or processing. As an example, the interface 600 can be implemented as an loT Edge unit 310 or as an loT Edge unit 230.

With the loT Edge units 230, 310, part of the processing which is required in or for the fifth layer 500 (the cloud) can be performed in the second, third or fourth layer. In particular, data can be pre-processed before the data is forwarded to the data sink 530. Thus the data traffic and latency can be improved.

Furthermore, an Internet-of-Things (loT) hub 700 is provided for example in the fifth layer 500. The loT hub 700 is coupled to each of the loT Edge units 230, 310. Preferably, the communication between the loT Edge units 230, 310 and the loT hub 700 relates to an encrypted communication.

According to an aspect of the invention, the loT hub 700 is used to remotely control, manage and/or monitor the loT Edge units 230, 310.

The loT hub 700 may comprise a container deployment unit 710, a recovery unit 720, a service unit 730, a pipeline unit 740 and/or a test unit 750.

According to an aspect of the invention, the container deployment unit 710 is used for the deployment of the containers 233, 113 in the loT Edge units 230, 310. This may include the management and update of software packages in the containers. Furthermore, the container deployment unit 710 is responsible for the software update, for the encrypted communication with the loT Edge units 230, 310. Furthermore, the pipeline unit 740 can be responsible for a CI/CD pipeline. Moreover, the deployment of the software in the containers can be automated. The loT hub 700 may also be responsible for the update of the respective container 213, 313 regarding the point of time and the version of the software.

The test unit 750 of the loT hub 700 may also be responsible for performing tests on the loT Edge units 230, 310. The test may relate to the integrity of the loT Edge units 230, 310.

Moreover, the loT hub 700 may analyse the data input and output towards the loT Edge units. Accordingly, an IO validation can be performed. Furthermore, the loT hub may adjust or harmonize the parameters received from the loT Edge units.

The loT hub 700 may also comprise a disaster recovery unit 720 which is responsible for a backup strategy, automatic backup of the configuration of the loT Edge units, a redeployment of the configuration of new and replaced hardware and/or the automatic provision of the hardware.

The loT hub 700 can monitor the containers and in particular monitor the resources of the container. Furthermore, the loT hub may be able to monitor the hardware components of the loT Edge units. These hardware components may comprise the CPU, the usage of the RAM, the storage monitoring and I/O monitoring.

According to an aspect of the invention, a CI/CD (a continuous integration/continuous delivery) pipeline is provided to deliver new versions of the software in the containers from the loT hub 700 to the loT Edge units 230, 310.

In particular, the loT hub 700 is coupled to the container 233, 313 via an encrypted communication link.

A fourth layer 400 relates to business logistics systems for managing the business-related activities of the manufacturing operation. ERP is the primary system and establishes the basic plant production schedule, material use, shipping and inventory layers. Time frame may be months, weeks, days, shifts. A fifth layer 500 relates to cloud services 500. The cloud services 500 may comprise a data sink 530 which can be implemented as a cloud server or cloud service. The data sink 530 can be a central data sink or several distributed or mirrored data sinks.

The above described layer can implement strict one-way communication protocols allowing for no data flow into the first layer 100. In addition to such an automation structure or architecture an external company network or enterprise external internet may be provided but is not coupled to the first, second or third layer due to security considerations. Within this context, the challenge is to leverage the benefits of cloud computing and big data, while still guaranteeing the established advantages of existing architectures: i.e. the high availability and reliability of the lower layer system (first layer 100) as well as the cyber security.

According to an aspect of the invention, an loT Edge unit acting as an interface 600 is provided which can operate independent from the processing unit 210, 220, 230 in the second layer 200 and allows the usage of data (output data) from the sensors 110, 120 or the processing unit 210, 220, 230 in the second or third layer 300 for analysis purposes. This data is not used to control or influence an operation of the existing automation architecture (first, second, third and fourth layer 100 - 400) is not changed but the improved interface 600 is provided e. g. to extract data and parameter from the equipment 20, 30 of the industrial plant to process the data if required and to output the data to a data sink 530 in the fourth level 400 or the fifth layer 500. The interface 600 only allows a one-way communication from the sensors to the data sink 530.

According to an aspect of the invention, an loT Edge unit acting as the interface 600 can use or share existing hardware or services in the second or third layer 200, 300 to perform its operation. The interface 600 can be used to extract data from various sensors sensing parameters from various types of equipment 20, 30 and/or from various processing unit in the second or third layer 200, 300 and to store the data in a data sink 530. However, before the data can be stored in the data sink 530, the data must be analysed, pre-processed, and/or possibly harmonized (e.g. with respect to their time information). The function and operation of the interface 600 is independent of the operation of the automation architecture.

A core process system provides process or asset specific data of the industrial plant, e.g. a chemical plant contextualizes the process or asset specific data of the chemical plants. Moreover, plant specific data of the (chemical) plants can be provided via the interface layer to the fifth layer. Here the plant specific data may refer to contextualized process or asset specific data. Process or asset specific data may include value, quality, time, measurement unit, asset identifier.

Via contextualization further context such as plant identifier, plant type, reliability indicator, or alarm limits for the plant may be added. In a further step technical asset structure of one or multiple plant(s) or a site and other asset management (e.g. asset network), plus application context (e.g. model identifier, third party exchange) may be added.

The fifth layer 500 may be a computing or cloud environment providing virtualized computing resources, like data storage and computing power. Plant specific data from one or more chemical plants can be provided to the external service. Such data may be provided in real time or on demand. Furthermore, data transfer to and/or from the external service can be performed in real-time or on demand. The fifth layer 500 is used to store, contextualize or aggregate plant specific data from more than one chemical plant and/or to store historical data from more than one chemical plant. This way data storage can be externalized, and the required on-premise storage capacities can be reduced plus history transfer is made redundant. The fifth layer 500 may comprise the data sink 530.

Furthermore, interface 600 and/or the fifth layer 500 may be configured to exchange data with 3rd party management systems, e.g. via integration of 3rd party external processing layer, to enable data visualization, to enable computing process workflows, to enable data calculations, to enable APIs to access data, to enable metadata of data storage, transfer and calculation, to provide interactive plant data working environment for users, e.g. operators and to verify and improve data quality.

The fifth layer 500 may be configured as a centralized cloud computing platform. The fifth layer 500 may be configured as a manufacturing/production/processing data workspace with full data integration across multiple plants including manufacturing/production/processing data history transport & streaming, collection of all data from all edge components. This way the full contextualization of all lower layer context may be integrated on the fifth layer 500 for multiple plants. Thus the fifth layer 500 may be further configured to run cloud-native apps, connect with external PaaS and Saas tenants, integrate machine learning with manufacturing data & processes, traintest-deploy, and/or visualize data, access apps, orchestrate.

By way of the above system architecture a bottom-up contextualization concept may be realized. In the bottom-up concept all information that is available on the lower-layers may already be added to the data as attributes, such that lower layer context is not lost. Here the first layer 100 as the lowest context layer may include measurement values and data, which are contextualized with respect to the parameter of the measurement was conducted with. The second or third layer 200, 300 may further contextualize by adding further tags relating to the individual chemical plant.

The contextualization concept may cover at least two fundamental types of context. One type may be the functional location within the production environment comprising multiple chemical plants. This may cover information about what and where this data point represents inside the production environment. Examples are the connection with a functional location, an attribute with respect to which physical asset the data is collected, etc. This context may be beneficially used for later applications, since it explains which data is available for which plants and assets.

The fifth layer 500 comprises an loT hub 700 which is coupled to the loT Edge unit 232 in the second layer 200 and the loT Edge unit 312 in the third layer 300.

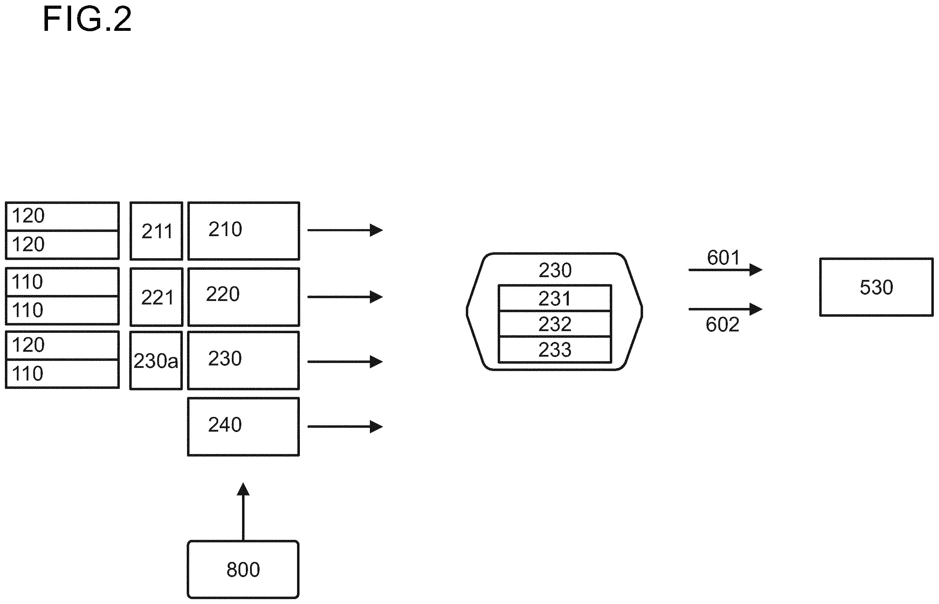

Fig. 2 shows a schematic representation of a part of the system of Fig. 1. In Fig. 2 several sensors 110, 120 belonging to the first layer 100 and several processing units 210, 220, 230, 240 from the second layer 200 are depicted. The sensors 110, 120 output measurement data which are inputted to input/output units (IO cards) 211, 221, 230a of the CMS unit 210, the MPs unit 220 or the analysing unit 230 respectively. The IO units 211, 221, 230a can be able to add metadata to the measurement data from the sensors 110, 120. This metadata can include time information like a time stamp. The time information e.g. in form of time stamps can be received from a NTP server 800. The measurement data together with their metadata can be processed in the units of the second layer 200. The output of these units 210-230 can be forwarded to an loT Edge unit acting as an interface 600. Here, the data can be analysed, pre-processed and/or harmonized before the data is forwarded to ta data sink 530 in the fourth or fifth layer 400, 500. The interface 600 can shared the processing resources e.g. of the analysing unit 230 or 310. Alternatively, the interface 600 can have dedicated resources. The interface 600 can have a digital output 601 and/or an analogue output 602 towards the data sink 530.

The metadata includes time information from a time stamp generator. This generator can use the Network Time Protocol NTP from a NTP server 800 to generate the time stamps.

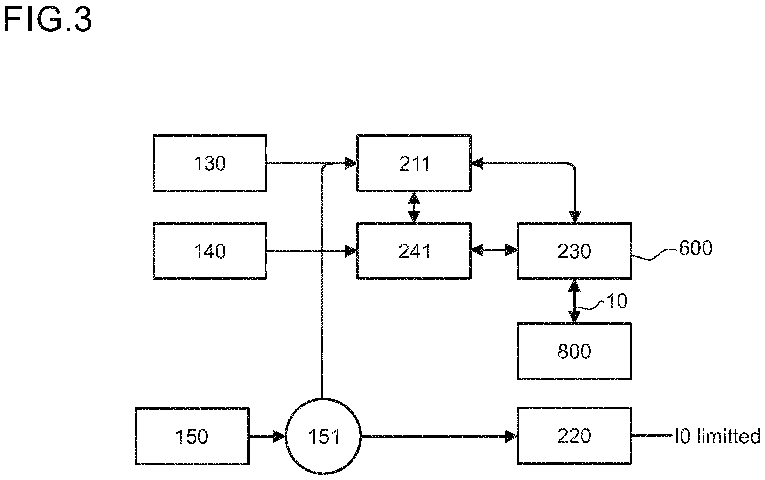

Fig. 3 shows part of the first and second layer of the system of Fig. 1. Here, sensors 130 - 150 are provided to measure parameter of equipment in the industrial plant 100. The data from the sensor 150 is forwarded to a data splitter 151. The output of the data splitter 151 is forwarded to a MPS unit 220, which uses the data to perform machine protection operations. The output from the data splitter 151 is forwarded to the IO unit 211. Here, optionally time stamps can be introduced as metadata. The output of the sensor 140 is received by the IO unit 241. The loT Edge unit 230 acting as interface 600 can e.g. be implemented as an industrial PC IPC which can be coupled to the IO unit 241 and/or the IO unit 211 and can add metadata (in form of time stamps). The IPC 600 can be coupled to a time stamp generator (like a NTP server) 610 to generate and introduce the time stamps as metadata.

The units in the first, second and third layer 100, 200, 300 are data sources and can be a Machine Protection System MPS, a Condition Monitoring System CMS or an industrial PC. In addition, the output of the sensor (via I/O units) can be a data source. Furthermore, a Process Information Management System (PIMS) or a Lab Information Management System (LIMS) can also be a data source.

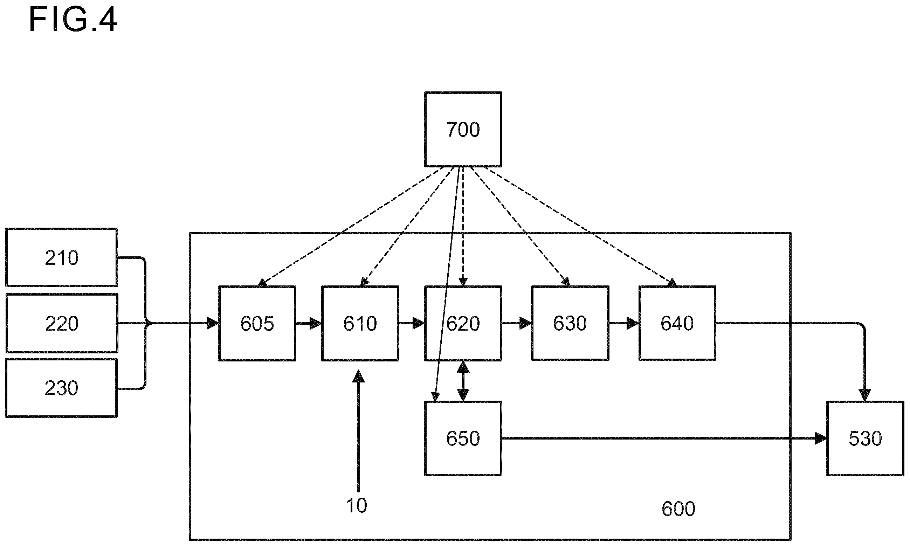

Fig. 4 shows schematic block diagram of an interface according tot an aspect of the invention. The interface 600 is implemented as an loT Edge unit and can receive the output data from the processing unit 210, 220, 230 from the second level 200 or from the sensors 110 - 150 in the first level 100. The interface 600 optionally comprises a data converter 605, an analyser 610, a (ring) buffer 620, a key performance indicator KPI calculator 650, an upload selector 630 and an uploader 640. The loT Edge unit 600 is coupled to the loT hub 700. Thus the loT hub can control a data converter 605, an analyser 610, a (ring) buffer 620, a KPI calculator 650, an upload selector 630 and an uploader 640. The analyser 610 is provided to analyse the data from the input sources 210, 220, 230 and to add metadata if required. The metadata 10 can be time information like a time stamp. The time information may also relate to a time shift, i.e. shifting timing information of the incoming data. This may be necessary if the respective data is to be compared or analysed with respect to other data. The received and possibly analysed data can be stored in a (ring) buffer 620. If the amount of data from a specific source is too high, the KPI calculator 650 can calculate key performance indicators KPI based on the data in the buffer 620. The KPI calculator 650 can forward the KPIs to the data sink 530. If the amount of data is not to high, an upload selector may select the data to be uploaded to the data sink 530. This data can then be uploaded by an uploader 640.

The sensors 110 - 150 can be High Frequency HF sensors like temperature sensors, pressure sensors, current sensors, position sensors, vibration sensors, or optical sensors (like a video camera, bar, optical fibres etc).

The interface 600 can be implemented or integrated into the loT Edge unit (e. g. analyser 230 and/or 310). The interface can receive data from the fist layer 100 (the sensors 110 - 150), from the second layer (CMS 210, MPS 220) and (or from the third layer 300 (CMS 320, PIMS 330). It should be noted that the interface 600 can only receive data from within the first, second or third layer but not from external sources. The interface 600 can receive raw data (sensor data) from the sensors and/or from the processing units 210, 220, 230, 240 in the second layer 200 as input. Depending on the processing unit 210 - 240 the interface 600 may also only receive key performance indicators. The protocol of the data can be a proprietary protocol. The data can be received as analogue or digital signals (Modbus, OPC-UA).

The interface 600 can analyse the incoming data. If the amont of data from one of the data sources is too high, the amount of data must be reduced for example by determining key performance indicators and forward the KPI instead of the raw data together with the metadata to the data sink 530.

In the data sink 530 the incoming data can be analysed for example with big data techniques.

A single unit device or system may fulfil the functions of several items recited in the claims. The mere fact that certain measures are recited in mutually different dependent claims does not indicate that a combination of these measures cannot be used to advantage. Procedures like the analysis of data and the adding of metadata to the data etc. performed by one or several units or devices can be performed by any other number of units, devices or systems. These procedures can be implemented as a program code means of a computer program and/or as dedicated hardware. A computer program product may be stored/distributed on a suitable medium such as an optical storage medium or a solid state medium supplied together with or as part of other hardware but may also be distributed in other form such as via the internet or other wired or wireless telecommunication systems.

Any reference signs in the claims should not be constructed as limiting the scope.

### List of reference signs

- 10: metadata
- 20: processing equipment
- 30: processing equipment
- 100: first layer
- 110: sensors
- 120: sensors
- 130: sensor
- 140: sensor
- 150: sensor
- 151: data splitter
- 200: second layer
- 210: condition monitoring system CMS
- 211: input/output units (IO cards)
- 220: machine protection system MPS
- 221: input/output units (IO cards)
- 230: analysing unit
- 230a: input/output units (IO cards)
- 231: analytic component
- 232: loT Edge unit
- 233: container
- 240: several processing units
- 241: unit
- 300: third layer
- 310: analysing unit
- 311: analytic component
- 312: loT Edge
- 313: container
- 320: condition monitoring system (CMS)
- 330: process information management system (PIMS)
- 400: fourth layer
- 500: fifth layer
- 530: data sink
- 600: interface
- 601: digital output
- 602: analogue output
- 605: data converter
- 610: server
- 620: (ring) buffer
- 630: upload selector
- 640: uploader
- 650: KPI calculator
- 700: loT hub
- 710: container deployment unit
- 720: recovery unit
- 730: service unit
- 740: pipeline unit
- 750: test unit
- 800: server
- CMS: condition monitoring system
- HF: High Frequency
- IPC: industrial PC
- MPS: machine protection system

## Claims

1. System for monitoring product processing equipment (20, 30) of an industrial plant, comprising
a first layer (100) having a plurality of sensors (110-150) configured to detect parameters of the product processing equipment (20, 30) of the industrial plant, ,
a second layer (200) configured to implement a process control system based on data from the first layer (100), and
a third layer (300) configured to implement an operational control system,
at least one Internet-of-Things Edge unit (230, 310) in the second and/or third layer (200, 300) configured to receive data from the first and/or second layer (100, 200) and to analyse the received data, and
an Internet-of-Things hub (700) configured to remotely control, manage and/or monitor the at least one Internet-of-Things Edge unit (230, 310).

2. System for monitoring product processing equipment according to claim 1, further comprising
an interface (600) coupled to the first and/or second processing layer (100, 200),
wherein the interface (600) comprises at least one Internet-of-Things Edge unit (230, 310) and is configured to analyse the data from the first and/or second layer (100, 200) and to add metadata to the data from the plurality of sensors (110 - 150),
wherein the interface (600) is configured to only allow a one-way data communication to the data sink (530).

3. System for monitoring product processing equipment according to claim 2,
wherein the interface (600) further comprises a data buffer (620), a key performance calculator (650) configured to determine at least one key performance indicator based on the data in the buffer (620), and an upload selector (630) configured to select data from the incoming data to be forwarded to the data sink (530).

4. System for monitoring product processing equipment according to claim 1, 2 or 3, wherein
the metadata (10) comprises time information and/or information on the sensor which has detected the data.

5. System for monitoring product processing equipment according to claim 4, wherein
the time information comprises time stamps or time shift information.

6. System for monitoring product processing equipment according to any one of the claims 1 to 5, wherein
the second layer (200) comprises condition monitoring system (210), and/or a machine protection system (220),
wherein the interface (600) is configured to analyse the data from the condition, monitoring system (210), and/or the machine protection system (220) and to add metadata to their output data, to process the data in order to reduce the amount of data if required, and to output the processed data to the data sink (530).

7. Monitoring system for monitoring product processing equipment according to any one of the claims 4 to 6, wherein
the interface (600) is configured to perform a time shifting on data from the first layer (100) based on time shift information in the metadata to harmonize the data with data from other sensors.

8. Industrial plant, comprising
at least one industrial plant equipment (20, 30),
a control system having a first layer (100) having a plurality of sensors (110 - 150) configured to detect parameters of the industrial plant equipment (20, 30), and a second layer configured to implement a process control system based on the data from the first layer (100), and
a system for monitoring product processing equipment (20, 30) according to any one of the claims 1 to 7.

9. Method of monitoring product processing equipment (20, 30) in an industrial plant by a monitoring system which has a first layer (100) with a plurality of sensors (110 - 150) for detecting parameters of the equipment (20, 30), a second layer (200) implementing a process control system based on data from the first layer (100), and a third layer implementing an operational control system, comprising the steps of:
receiving data from the first and/or second layer (100, 200) and analysing the received data in at least one Internet-of-Things Edge unit (230, 310) in the second and/or third layer (200, 300) and
remotely controlling, managing and/or monitoring the at least one Internet-of-Things Edge unit (230, 310) in an Internet-of-Things hub (700).

10. Computer program for monitoring product processing equipment, the program comprising code means for causing the system according to any one of the claims 1 to 8 to execute a method according to claim 9, when the program is run on a computer controlling the system.
